(19) **Europäisches Patentamt / European Patent Office / Office européen des brevets**

(11) **EP 4 563 533 A1**

(12) **EUROPEAN PATENT APPLICATION**
published in accordance with Art. 153(4) EPC

(43) Date of publication:
**04.06.2025 Bulletin 2025/23**

(21) Application number: **23845760.0**

(22) Date of filing: **27.07.2023**

(51) International Patent Classification (IPC):
**C01G 39/04** (2006.01)  **G01N 21/64** (2006.01)
**G01N 27/00** (2006.01)

(52) Cooperative Patent Classification (CPC):
**C01G 39/04; G01N 21/64; G01N 27/00**

(86) International application number:
**PCT/ES2023/070485**

(87) International publication number:
**WO 2024/023387 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022 ES 202230706**

(71) Applicants:
• **Universitat Rovira I Virgili**
  **43003 Tarragona (ES)**
• **Consejo Superior de Investigaciones Científicas (CSIC)**
  **28006 Madrid (ES)**

• **Universitat Politècnica de València**
  **46022 Valencia (ES)**

(72) Inventors:
• **CASANOVA CHÁFER, Juan**
  **43003 Tarragona (ES)**
• **LLOBET VALERO, Eduard**
  **43003 Tarragona (ES)**
• **GARCÍA ABOAL, Rocío**
  **28006 Madrid (ES)**
• **ATIENZAR CORVILLO, Pedro**
  **28006 Madrid (ES)**
• **FELIZ RODRÍGUEZ, Marta**
  **28006 Madrid (ES)**

(74) Representative: **Ungria López, Javier
Avda. Ramón y Cajal, 78
28043 Madrid (ES)**

(54) **HYBRID NANOMATERIAL COMPRISING OCTAHEDRAL CRYSTALLINE CLUSTERS OF FORMULA [MO6II8(OH)A(H2O)A2]·2H2OR ON GRAPHENE**

(57)     The present invention relates to a hybrid nanomaterial comprising an octahedral crystalline cluster of formula $[Mo_6I^i_8(OH)^a_4(H_2O)^a_2]\cdot2H_2O$, wherein the crystalline cluster is supported on graphene. Furthermore, the invention relates to a method for preparing the hybrid nanomaterial of the invention, and to a gas detection system comprising at least: (a) a gas sensor provided with a hybrid nanomaterial according to the present invention; and (b) optical interrogation means and/or electrical interrogation means configured to interrogate the gas sensor.

Fig. 1

EP 4 563 533 A1

**Description**

**OBJECT OF THE INVENTION**

The present invention belongs to the technical field of nanotechnology and relates to a hybrid nanomaterial comprising an octahedral molybdenum iodide crystalline cluster supported on graphene, usable as a gas sensor through two different transduction schemes: optical and electrical.

**BACKGROUND OF THE INVENTION**

Air pollution is probably the greatest threat to environmental health worldwide and accounts for 7 million premature deaths each year. Detecting gases, such as nitrogen dioxide ($NO_2$) and ammonia ($NH_3$), is useful in many different technical fields, for example and not limited to: in environmental applications related to the detection of polluting substances, in the food industry and in safety applications within the petrochemical industry.

In view of this, various techniques have been developed for detecting pollutants, such as gas chromatography-mass spectrometry, which can selectively detect pollutants at trace levels. Nevertheless, these instrumental techniques are costly, bulky, use consumables and require frequent attention by qualified personnel. For this reason, there are currently only a few automated air quality monitoring stations, which are sparsely distributed in specific areas. This is clearly insufficient for the effective monitoring of pollution, as this can only be achieved through a denser network of analysis locations (or points) (greater granularity), distributed over larger areas.

Furthermore, various technologies have been used to develop gas sensors, for example, chemoresistive devices, which have garnered major research efforts due to their simple handling and readout instrumentation, durability, high potential for miniaturisation and industrial scalability. For decades, metal oxide semiconductors (MOX) have dominated the field of gas detection due to their high sensitivity, non-toxicity and availability. However, their poor selectivity and high energy consumption still prevent their effective implementation in commercial applications.

In recent years, the possibility of using carbon nanomaterial-based sensors, especially those using graphene, has been suggested and they have become a common approach to developing devices that operate at room temperature. Room temperature operated gas sensors are energy efficient and help to reduce manufacturing costs, which makes them very attractive for integration into air quality monitoring networks. Despite the remarkable properties of graphene, such as the high surface area/volume ratio, low noise levels, high carrier density and mobility and affordable production costs, to develop one of these sensors using such a material, it would be necessary to overcome a number of drawbacks associated with it. Thus, graphene, especially in its pristine form, exhibits limited sensitivity and selectivity.

To that end, major research efforts have been directed at modifying or functionalising carbon-based films to improve their detecting properties. The most direct functionalisation strategies are probably the modification of graphene by plasma treatments, for the creation of defects and the replacement of carbon atoms with atoms of a different nature, or the use of chemistry processes with solvents for covalent or non-covalent functionalisation of the graphene surface. With these approaches, the sensitivity of the graphene layers is generally improved, but, in general, the problem of selectivity persists, given the low specificity of the atoms and functional groups present on the graphene surface.

Another well-known strategy is the functionalisation of graphene with organic compounds as macrocycles, aptamers or cavitands. This approach significantly improves the selectivity due to the high specificity of the organic compounds (i.e., which act as chemical receptors) to specific gases. However, the organic nature of this functionalisation, prone to degradation under operational conditions, may compromise the long-term stability of the device.

The high specificity may result in limited reversibility of the gas-solid interactions, which compromises the repeatability of the response. Significant increases in sensitivity and some adjusting of selectivity are possible with a widely used strategy consisting of decorating graphene with nanoparticles. However, these MOX nanoparticles typically require moderate to high operating temperatures to activate their detecting properties. Therefore, the requirement to be able to develop cost-effective and energy-efficient devices may be jeopardised.

As an alternative, the use of molybdenum chalcogenides and their derivatives in gas detection applications has been explored in recent years. Nevertheless, these nanostructured semiconductors vary in composition and morphology, which adversely affects detection performance.

Therefore, the need to develop novel gas sensors capable of monitoring low concentrations of flammable, combustible or toxic gases in real time still exists in the art. Such devices should also have other essential properties, such as: reliability, sensitivity, selectivity, repeatability, accuracy and long-term stability, in addition to low cost and low power consumption. It is also desirable that such sensors can be integrated into portable gas detection systems, as well as integrated into personal detectors for workers at risk of exposure.

**BRIEF DESCRIPTION OF THE FIGURES**

    **Figure 1:** shows the orthogonal structure of the crystalline cluster comprised in the hybrid nanomaterial of the invention, wherein M represents the orthogonal positions of molybdenum (Mo), X' represents the internal positions of iodide (I), and $L^a$ represents the apical positions of water ($H_2O$) and hydroxo (OH).

**Figure 2:** (a) shows the Raman spectrum of the Mos@Graphene hybrid. (b) shows the Raman region of the $Mo_6$ sample measured before (black line) and after (grey line) the heat treatment (60°C). All spectra were obtained at 514 nm.

**Figure 3:** (a) shows the variation of the electrical resistivity of a hybrid nanomaterial according to the material invention, in the presence of $NO_2$ (range of 250-1000 ppb) and operated at room temperature, (b) compares the calibration curves obtained in the detection of $NO_2$, using pure graphene and the hybrid nanomaterial of the invention.

**Figure 4:** (a) shows the dynamic response towards $NO_2$ (range of 50-250 ppb) operating at room temperature for the Mos@Graphene nanocomposite according to the present invention, (b) compares the calibration curves obtained in the detection of $NO_2$, in a dry and a wet atmosphere.

**Figure 5:** shows a repeatability experiment for a hybrid nanomaterial of the invention applying 15 pulses of 100 ppb of $NO_2$.

**Figure 6:** (a) shows an example of the dynamic responses of the hybrid nanomaterial sensor of the invention when detecting $NH_3$. (b) compares the calibration curves obtained for pure graphene and for the hybrid nanomaterial of the invention, for the detection of $NH_3$.

**Figure 7:** (a) shows the room-temperature photoluminescence (PL) spectra of a thin film of pure $Mo_6$ material deposited on a quartz substrate and exposed under Ar, air, $NO_2$ and $NH_3$ gases. (b) shows room-temperature PL spectra measured directly on Mos@Graphene coating an alumina substrate used in resistive transduction and exposed under Ar, air, $NO_2$ and $NH_3$ gases.

**DESCRIPTION OF THE INVENTION**

The present invention relates to a hybrid nanomaterial comprising an octahedral molybdenum iodide crystalline cluster supported on graphene, usable as a gas sensor through two different transduction schemes: optical and electrical. Thus, the present invention also relates to a gas detection system provided with at least one gas sensor having the hybrid nanomaterial of the invention, comprising crystalline clusters supported on graphene. The gas detection systems, according to the present invention, can operate under two different transduction schemes: optical and electrical, since the nanohybrids provided in them modify both their electrical resistivity and their optical properties (for example, their photoluminescence (PL)) in the presence of gases. Given these extraordinary properties, which are characteristic of the nanohybrids of the invention, it is possible to develop highly selective and low-cost gas detection systems, which operate at room temperature and which, furthermore, exhibit high stability and repeatability in dry and wet environments.

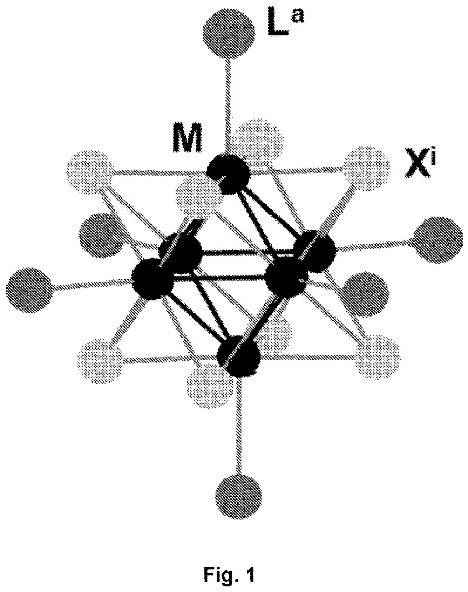

Thus, in a first aspect, the invention relates to a hybrid nanomaterial comprising a crystalline cluster of formula $[Mo_6I^i_8(OH)^a_4(H_2O)^a_2] \cdot 2H_2O$, and having an octahedral structure, wherein the crystalline cluster is supported on graphene. An illustration comprising the cluster $[Mo_6I'_8(OH)^{\cdot a}_4(H_2O)^a_2]$-$2H_2O$ is shown in figure 1. Thus, the hybrid nanomaterial comprises a crystalline cluster of formula $[Mo_6I^i_8(OH)^a_4(H_2O)^a_2] \cdot 2H_2O$, according to the octahedral structure shown in figure 1, wherein M represents the orthogonal positions of molybdenum (Mo), $X^i$ represents the internal positions of iodide (I), and $L^a$ represents the apical positions of water ($H_2O$) and hydroxo (OH), wherein the crystalline cluster is supported on graphene. The crystalline cluster of formula $[Mo_6I^i_8(OH)^a_4(H_2O)^a_2] \cdot 2H_2O$ can be found as the cis isomer or as the *trans isomer.*

In the context of the present invention, the term "nanomaterial" refers to a material in which its largest dimension is less than 1 μm (i.e., 1000 nm). In particular embodiments of the present invention, the largest dimension of the nanomaterial is less than 1000 nm, less than 900 nm, less than 800 nm, less than 700 nm, less than 600 nm, less than 500 nm, less than 400 nm, less than 300 nm, less than 200 nm, less than 100 nm, less than 90 nm, less than 80 nm, less than 70 nm, less than 60 nm, less than 50 nm, less than 40 nm, less than 30 nm, less than 20 nm, less than 10 nm, or less than 5 nm.

In the context of the present invention, the term "graphene" refers to an allotrope of carbon consisting of carbon atoms arranged in a hexagonal pattern, wherein the covalent bonds between the bonded carbon atoms are generated from the $sp^2$ hybrid orbital overlap. In an embodiment of the invention, graphene is provided in the form of graphene nanoplatelets, graphene nanoribbons, a graphene helix, graphene superlattices, or combinations thereof. In a preferred embodiment of the present invention, graphene is provided in the form of graphene nanoplatelets. In a preferred embodiment of the present invention, graphene is provided in the form of graphene nanoribbons. In a preferred embodiment of the present invention, graphene is provided in the form of a graphene helix. In a preferred embodiment of the present invention, graphene is provided in the form of graphene superlattices. In the context of the invention, "graphene nanoplatelets" refer to a multilayer form of graphene that is available in a range of average particle thicknesses and diameters, wherein the thickness of a single graphene sheet is 0.345 nm (in the case of multiple stacked sheets, the thickness can be a few nanometres), and wherein the diameters are in a range from a few hundred nanometres to several microns, and which have a 2D nanoscale carbon structure in planar/lamellar form. Alternatively, in particular embodiments of the present invention, the solid support can be graphene and/or modified graphene, wherein the modified graphene is selected from the group consisting of graphene oxide, reduced graphene oxide, N- and S-doped graphene, and combinations thereof.

In an embodiment of the present invention, the crystalline cluster of formula $[Mo_6I^i_8(OH)^a_4 (H_2O)^a_2]\cdot 2H_2O$ is supported on graphene in the crystalline or polymeric form of the cluster. In other words, in the hybrid nanomaterial of the invention the cluster does not lose its crystalline form in the hybridisation reaction with the graphene support.

In an additional aspect, the invention relates to a method for preparing a hybrid nanomaterial according to the present invention, wherein the method comprises:

a) Dispersing a precursor of formula $(Bu_4N)_2[Mo_6I^i_8 (O_2CCH_3)^a_6]$ in a mixture of water, acetone and triethylamine (TEA) at room temperature under continuous stirring;
b) Heating the suspension resulting from step (a) at 35°C for 1 hour;
c) Slowly evaporating the solution resulting from step (b) at room temperature, in such a way that microcrystals are formed;
d) Collecting the microcrystals resulting from step (c) when the solution becomes transparent.
e) Suspending the microcrystals resulting from step (d) in dichloromethane under sonication;
f) Suspending graphene in dichloromethane under sonication;
g) Adding the suspension resulting from step (e) to the suspension resulting from step (f);
h) Homogenising the mixture resulting from step (g) under sonication.

In another aspect, the invention relates to a gas detection system comprising, at least:

- a gas sensor provided with a hybrid nanomaterial comprising an octahedral crystalline cluster of general expression $[M_6X^i_8L^a_6]^{n+/n+}$ on a solid support; and
- optical interrogation means or electrical interrogation means configured to interrogate the gas sensor.

In this aspect of the invention, the hybrid nanomaterial comprises an octahedral crystalline cluster of formula $[M_6X^i_8L^a_6]^{n+/n+}$ wherein M is a metal selected from molybdenum or tungsten, $X^i$ is an internal ligand of the octahedral crystalline structure according to the structure of figure 1, wherein the internal ligand is selected from chlorine, bromine or iodine, and wherein $L^a$ is an apical ligand of the octahedral crystalline structure according to the structure in figure 1, wherein the apical ligand is generally selected from halogens, O-, S- and N-donor ligands. In an embodiment of this aspect of the invention, the solid support is selected from the group consisting of graphene, graphene oxide, reduced graphene oxide and N- and S-doped graphene.

In a final aspect, the present invention relates to a gas detection system comprising, at least:

- a gas sensor provided with a hybrid nanomaterial according to the first aspect of the present invention; and
- optical interrogation means or electrical interrogation means, configured to interrogate the gas sensor.

As described above, the gas detection systems provided with gas sensors made of the hybrid nanomaterials according to the present invention have, among others, the following advantages: they are easy to use, can be miniaturised, function properly at room temperature, have a low manufacturing cost, consume little power and exhibit excellent gas detection properties.

In the context of the present invention, the expression "interrogate the gas sensor" should be understood to mean detecting changes in some physically measurable variable associated with said gas sensor. Thus, for example, in a preferred embodiment of the invention the optical interrogation means are configured to detect photoluminescence from the gas sensor. In another preferred embodiment of the invention, the electrical interrogation means are configured to detect variations in the electrical resistivity of the gas sensor. Both interrogation means capable of detecting photoluminescence from the gas sensor and interrogation means capable of detecting variations in the electrical resistivity of the gas sensor, which are similar to those used in the context of the present invention, are already known in the state of the art and will therefore not be described in more detail herein. In a preferred embodiment of the invention, the gas detection system comprises both optical interrogation means and electrical interrogation means.

The gas detection system of the present invention can be used to detect $NO_2$ and/or $NH_3$. In a particular embodiment, the gas detection system of the present invention can be used for to simultaneously detect $NO_2$ and $NH_3$.

This gas detection system is particularly advantageous because it uses - simultaneously - two different transduction schemes: electrical (e.g., of the resistive type) and optical. Thus, in an embodiment of the present invention, the simultaneous use of these two different interrogation schemes (resistive and optical) is expressly envisaged. In the context of the present invention, the simultaneous use of the two different interrogation schemes (resistive and optical) is referred to as "orthogonal sensing". The combination of said electrical and optical transduction schemes in a single system increases the selectivity of gas detection and further makes it possible to be multi-parametric, which allows its implementation in air quality monitoring systems due to its ease of use, low cost, low power consumption and excellent gas detection properties. Furthermore, the simultaneous use of two different detection mechanisms greatly increases the versatility of the system and enables it to detect more different gaseous species. More particularly and based on what has already been seen, the electrical interrogation means would allow very good detection of $NO_2$: the limit of quantification would be of the order of 10 ppb and excellent repeatability of the response would be achieved (0.9% relative error). On the contrary, the optical interrogation means would not be effective in detecting this particular gas. Likewise, in the case of $NH_3$, the optical interrogation means would allow very good detection of this gas, whereas the electrical interrogation means would not properly carry out this task.

All terms and embodiments described herein are equally applicable to all the aspects of the invention. It should be noted that, as used in the specification and attached claims, the singular forms "a/an" and "the" include their references in the plural, unless the context clearly indicates otherwise. Similarly, the term "comprises" or "comprising" as used herein also describes "consists of" or "consisting of" in accordance with the generally accepted patent practice.

## EXAMPLES

The present invention is in no way limited to the embodiments disclosed herein. Other possible embodiments of this invention will be obvious to the person skilled in the art in the light of this description. Accordingly, the scope of protection of the present invention is defined, exclusively, by the claims.

Example 1: Materials and methods.

The synthesis of the molybdenum clusters was achieved by dispersing the precursor of the cluster $(Bu_4N)_2[Mo_6I^i_8(O_2CCH_3)^a_6]$ (30 mg) in a mixture (15 ml) of water, acetone and triethylamine (TEA) (50/45/5% v/v, respectively) in a roundbottomed flask with continuous magnetic stirring (500 rpm) at room temperature. Subsequently, a bubbler was connected to the flask and the resulting orange-yellow suspension was heated at 35°C for 1 hour. The mixture evolved into a solution over time, which was added to a 10 ml vial sealed with perforated parafilm for slow evaporation for 5-7 days. Finally, red microcrystals were collected from the remaining solution. The crystalline material was washed twice with acetone and once with Milli-Q water (10 ml), to provide the solid identified as $[Mo_6I^i_8(OH)^a_4 (H_2O)^a_2]\cdot 2H_2O$ (hereinafter, $Mo_6$). It should be noted that the optimum crystal size is achieved when the solution becomes transparent.

To support the molybdenum clusters on graphene, two solutions were prepared in parallel. First, a 10 ml graphene suspension (0.5 mg/ml) in dichloromethane was made. Then, the resulting suspension was placed in an ultrasonic tip to achieve proper exfoliation of the graphene. In particular, pulsed sonication (1 s on/2 s off) at 280 W was applied for 90 minutes. A 1 ml suspension of $Mo_6$ (0.25 mg/ml) in dichloromethane was prepared by sonication for 30 minutes in an ultrasonic bath. Then, the $Mo_6$ mixture was added to the graphene suspension, which resulted in graphene loaded with 5% $Mo_6$. The mixture was homogenised for 10 minutes with stirring. Subsequently, the solution was sonicated in an ultrasonic bath for 1 hour, which resulted in a suitable distribution of the molybdenum clusters supported on graphene (hereinafter, $Mo_6$@Graphene). The resulting nanomaterial, according to the present invention, was deposited by spray coating. Specifically, the compound was deposited on screen-printed platinum electrodes on alumina substrates. To avoid degradation of the aggregates, a moderate temperature (60°C) was applied during spray-coating deposition and nitrogen was used as carrier gas.

UV-Vis spectra were acquired at 20°C, using a Varian Cary 50 Conc spectrophotometer equipped with 10 x 10 mm quartz cells. Steady-state PL measurements were recorded in an Edinburgh Instruments FLS1100 spectrofluorometer using a 450 W xenon lamp equipped with a double monochromator for excitation and emission coupled to a cooled photomultiplier (PMT-980). Raman spectra were obtained from solid samples previously deposited on quartz substrates, using a "Reflex" Renishaw spectrometer, equipped with an Olympus microscope. The excitation wavelength was 514 nm from an $Ar^+$ ion laser, while the laser power was ~10-25 mW. Twenty acquisitions were taken for each spectrum. Powder X-ray diffraction (XRD) patterns were obtained by using a Philips X'Pert diffractometer and copper radiation $(CuK\alpha = 1.541178$ Å). FESEM images were recorded with a Zeiss Ultra 55 field FESEM apparatus (Atlanta, GA, USA) equipped with a backscattered electron (BSE) detector.

Once homogeneous layers were achieved, the gas sensors were placed in an airtight test chamber (dead volume of 35 $cm^3$). Subsequently, the chamber was connected to a gas mixing and supply system consisting of different calibrated gas cylinders. A pure dry air atmosphere was used (Air Premier purity: 99.999%). The total flow was adjusted to a low rate (100 ml/min) using a set of flow controllers and solenoid valves. The effect of ambient moisture on the sensor's performance was also evaluated by using a controller evaporator mixer to humidify the atmosphere.

The sensor resistances were monitored using a multimeter, recording the resistance changes induced by different gas concentrations. Specifically, the sensors were exposed to given concentrations of target gases for 5 minutes and then stabilised for 15 minutes under dry air flow. Several concentrations of gas species were applied by performing successive dilutions with pure dry air and the detection responses were defined as $(\Delta R/R_0)$ expressed as a percentage. Where $R_0$ is defined as the resistance level of the sensor in air, while $\Delta R$

corresponds to the resistance changes obtained during 5 minutes of exposure to the gas.

Samples for carrying out UV-Vis and photoluminescence (PL) experiments were prepared by dispersing 5 mg of the sample ($Mo_6$ or $Mo_6$@Graphene) in 1 ml of acetonitrile and sonicated for 10 min. Subsequently, the suspensions were deposited by drop-cast onto an acid-treated quartz substrate ($Mo_6$ sample) and an alumina substrate ($Mo_6$@Graphene sample) placed on a hotplate at 50°C. Then, the samples were placed inside a screw cap cuvette and fixed with a small piece of commercial Blu-Tack. The samples were purged for 20 min with Ar, air and $NO_2$ (balanced with pure synthetic air) before each *in situ* measurement. The measurements with $NH_3$ were taken by gas diffusion of 10 $\mu$l ammonium hydroxide solution (28% $NH_3$ wt, Sigma Aldrich) placed at the bottom of the cuvette. The amount of gaseous $NH_3$ was calculated from Henry's law (Hcp = 0.58 M/Pa at 298.15 K) and considering the equilibrium concentration of ammonia in solution (kb = $1.8 \cdot 10-5$).

Example 2: Characterisation of the nanomaterial

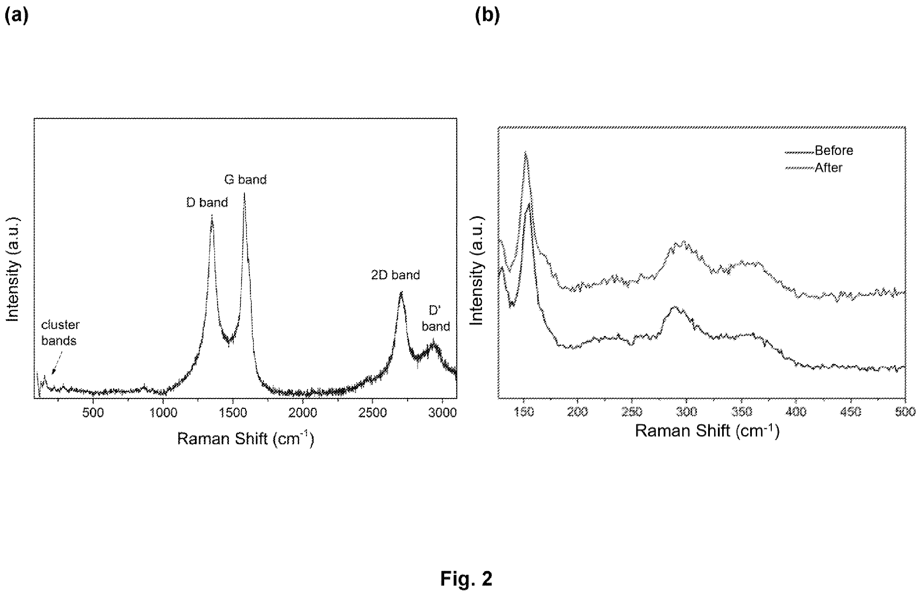

The crystalline material $[Mo_6I^i_8(OH)^a_4(H_2O)^a_2] \cdot 2H_2O$ ($Mo_6$) and its derived nanohybrid ($Mo_6$@Graphene) were analysed using several techniques, such as Raman spectroscopy, powder X-ray diffraction and field-emission scanning electron microscopy (FESEM). The immobilisation of $Mo_6$ on graphene was performed by mixing the respective precursors dispersed in dichloromethane and confirmed through Raman spectroscopy (figure 2a), resulting in $Mo_6$@Graphene. In this sense, the Raman shifts below 360 cm$^{-1}$ are associated with the presence of molybdenum clusters, while at higher frequencies, the characteristic D, G, 2D and D' bands of graphene appear at 1347, 1588, 2712 and 2938 cm$^{-1}$, respectively. It is worth noting that the D band is associated with the presence of structural defects, disordered carbon atoms in the sp$^2$ configuration and carbonaceous impurities. Whereas the G band is related to the in-plane vibrations of the sp$^2$ carbon bonds. Therefore, the D/G ratio revealed a low crystalline graphene, and the presence of defects and oxygenated functional groups grafted onto the graphene probably supports the immobilisation of the Mo clusters. The immobilised inorganic groups on the graphene surface are essential in gas detection performance, which allows for greater interactions with the gas compounds.

Furthermore, the crystallinity and integrity of the cluster after the heat treatment (60°C) needed for the preparation of the resulting Mos@Graphene was studied:

- Raman: Figure 2b shows intense bands with Raman shifts at 129, 153, 292 and 357 cm$^{-1}$, associated with Mo-Mo, Mo-I and Mo-O vibrations of the cluster. These Raman shifts are similar to those reported for similar hexamolybdenum clusters with iodide materials, revealing that the heat treatment applied during the experimental protocol does not damage the crystallinity of the cluster due to the lack of differences between the two spectra.

- X-ray diffraction (XRD): The synthesis and integrity of the clusters after heat treatment was also confirmed through powder X-ray diffraction, where the diffractogram of the $Mo_6$ cluster shows the characteristic diffraction peaks of the single crystal. This family of planes is associated with a preferential orientation of the crystalline material when deposited on a flat surface. Furthermore, the diffractograms of the resulting hybrid ($Mo_6$@Graphene) before and after the heat process applied during the deposition step show no variation. It should be noted that the cluster-related peaks observed in the diffractogram of the $Mo_6$ cluster can also be observed in the resulting nanohybrid (e.g., before exposure to the heat process), which reveals that the cluster orientation is maintained. Furthermore, there are no significant differences in the diffractograms of Mos@Graphene before and after heat treatment. In this regard, XRD also confirms that the synthesis and deposition processes developed avoided the degradation of the Mo clusters. The robustness of the prepared cluster materials is an advantage for preparing gas sensors and performing the resistive and optical measurements described below.

- Field emission scanning electron microscopy (FESEM): The surface of the Mos@Graphene nanomaterial was observed by FESEM and a highly porous surface can be observed, which may be of interest from the point of view of gas detection. Furthermore, these observations confirm the homogeneous distribution of crystalline Mo cluster particles supported on graphene.

Example 3: Gas detection using electrical measurements

The ability of the hybrid nanomaterial according to the invention to detect several gas species was evaluated under room temperature operating conditions. This approach to the invention enables the development of gas sensors with low power consumption and reduced manufacturing costs.

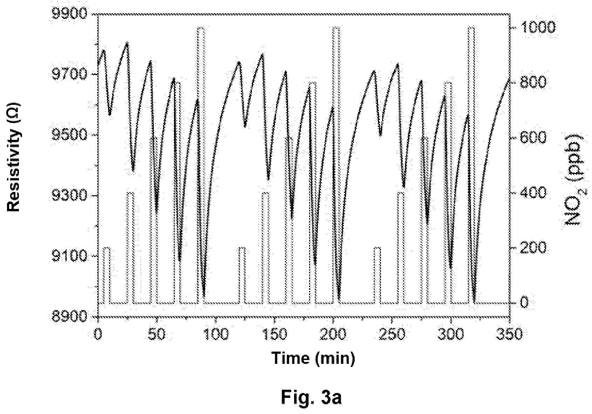

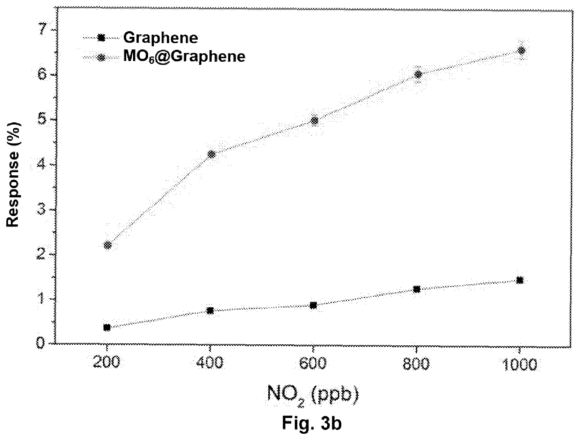

Different concentrations (250, 500, 750 and 1000 ppb) of $NO_2$ were applied during several consecutive measurement cycles (figure 3a), obtaining significant differences when graphene is loaded with molybdenum clusters in comparison to its pure counterpart. Specifically, the calibration curves (figure 3b) revealed that the hybrid nanomaterial sample according to the invention ($Mo_6$@Graphene) presents up to 5 times higher electrical responses (i.e., the intensity of the resistance changes induced by the exposure to $NO_2$) than pure graphene. In terms of sensitivity, which is given by the slope of the curves shown in figure 3b, the hybrid nanomaterial layer of the invention shows four times higher sensitivity towards $NO_2$ than pure graphene.

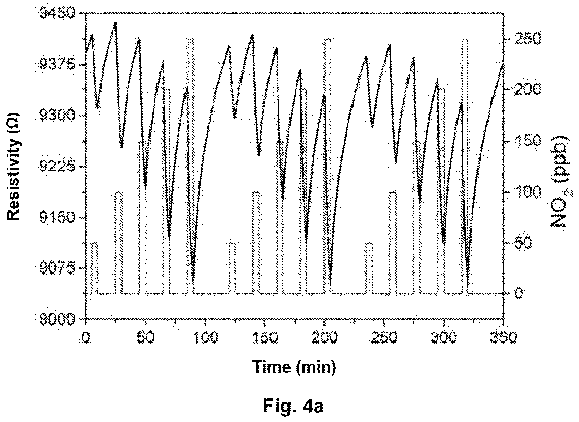

Furthermore, lower $NO_2$ concentrations were tested to evaluate the behaviour of the hybrid nanomaterial of the invention in environmental monitoring applications. Taking into account the Threshold Limit Values (TLV) defined by the Clean Air Act Text (United States Environmental Protection Agency) and Ambient Air Quality (European Union), $NO_2$ concentrations ranging from 50 to 250 ppb were tested. Figure 4a shows an intelligible and repeatable detection of the target gas by the hybrid nanomaterial according to the invention ($Mo_6$@Graphene), which allows for its potential use in commercial applications. It is worth noting that even in this low range of $NO_2$ concentrations, the developed sensor shows good baseline stability under room temperature operating conditions. On the contrary, pure graphene has poor detection performance in this concentration range, experiencing low repeatability due to the slight resistance changes induced by the exposure to the target gas.

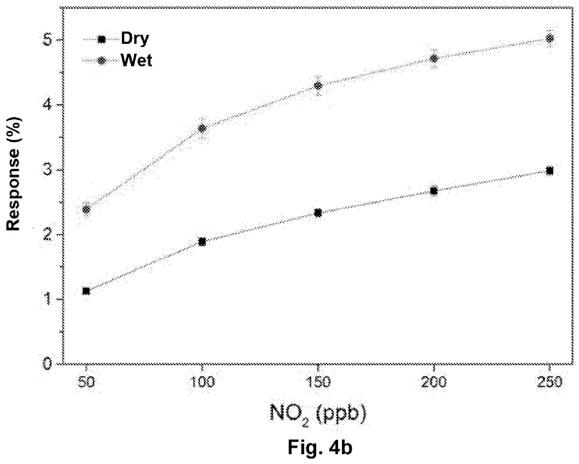

Nevertheless, ambient moisture is an element that interferes with gas detection performance, which is why $NO_2$ was also detected in the range of 50 to 250 ppb under wet conditions. Accordingly, the previous experiment carried out under dry conditions was reproduced at 60% relative humidity for the cluster-loaded graphene. Figure 4b shows a comparison of the $Mo_6$@Graphene sample in both environments, which reveals a significant increase in the detection response (up to double) when the sensor operates under wet conditions. However, the sensitivity (i.e., the slope of the calibration curve) remains almost unchanged under dry or wet conditions, which is an outstanding result for implementation in environmental monitoring devices.

In view of the intelligible detection responses and the low noise levels recorded, the limits of detection and quantification (LOD and LOQ, respectively) were evaluated measuring trace levels of $NO_2$ ranging from 10 to 25 ppb. The calibration curve was used to estimate both parameters through the following equations:

$$LOQ = 10\frac{S_y}{b} \qquad LOD = 3\frac{S_y}{b}$$

where Sy are the standard deviations of the y-residuals, while b corresponds to the sensitivity (slope) of the calibration curve. Furthermore, a factor of 10 and 3 is applied to the LOQ and LOD, respectively. As a result, the sensitive layer of the hybrid nanomaterial reveals an LOQ of 10.3 ppb, while the estimated LOD is 3.1 ppb. It is worth noting that these values are well below the TLV required for environmental monitoring applications. The operating conditions of the device (i.e., 5 minutes of exposure to the gas and room temperature working conditions) result in advantageous characteristics such as low power consumption, high sensitivity and rapid detection of gas species.

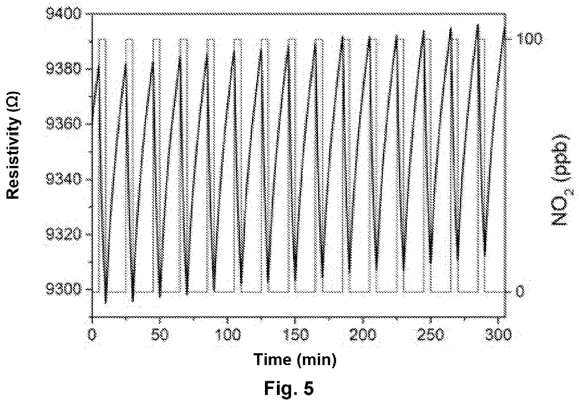

Nevertheless, the repeatability of the gas sensor is a key influencing parameter that determines the potential of the graphene layer with clusters that is developed for use in gas detection. Accordingly, successive cycles of 5 min of $NO_2$ exposure followed by 15 min of recovery in dry air were recorded (Figure 5). As a result, the hybrid nanomaterial of the invention revealed excellent sensor repeatability, showing an error of about 0.9%.

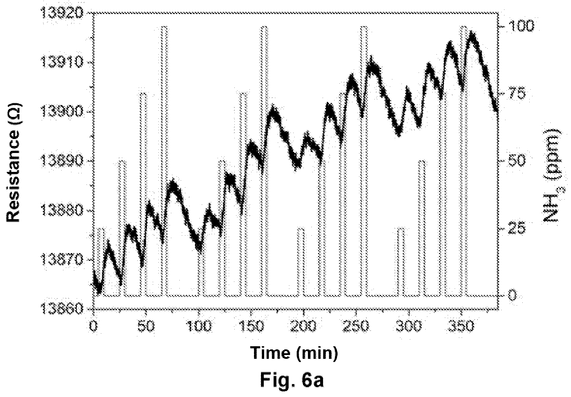

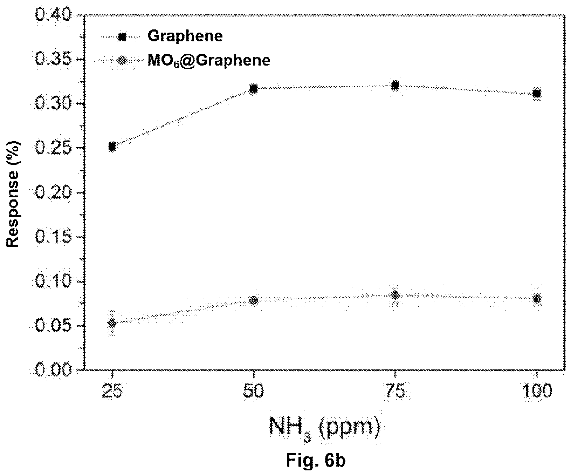

In addition to the detection of an electron-acceptor gas such as $NO_2$, the detection performance of pure and cluster-loaded graphene was also evaluated against an electron-donating species such as ammonia ($NH_3$). Figure 6a shows the resistance changes obtained for the hybrid nanomaterial sample of the invention when detecting $NH_3$ in the range of 25-100 ppm. A very significant baseline drift and poor response can be observed. In fact, it is worth noting that the resistive response of pure graphene is higher than that of cluster-loaded graphene, as shown in figure 6b. However, considering that the sensitivity is given by the slope of the calibration curve, it can be concluded that the hybrid nanomaterial of the invention is virtually insensitive to $NH_3$; as responses are lower than 0.1%, they hardly change when exposed to different ammonia concentrations.

In view of the results in figures 6a and 6b, it was necessary to check whether or not the absence of a resistive response for ammonia could be due to the decomposition of the Mo clusters, due to the basicity of $NH_3$. In this perspective, the robustness of $Mo_6$ was evaluated by powder X-ray diffraction analysis. Specifically, a thin film of the molybdenum cluster was prepared and exposed to $NH_3$. XRD diffractograms of a hybrid nanomaterial sample according to the invention $Mo_6$@Graphene were carried out before and after exposure to ammonia and showed no changes. This reveals the excellent stability of the $Mo_6$ clusters, which do not degrade when exposed to ammonia or nitrogen dioxide.

Example 4: Gas detection using optical measurements

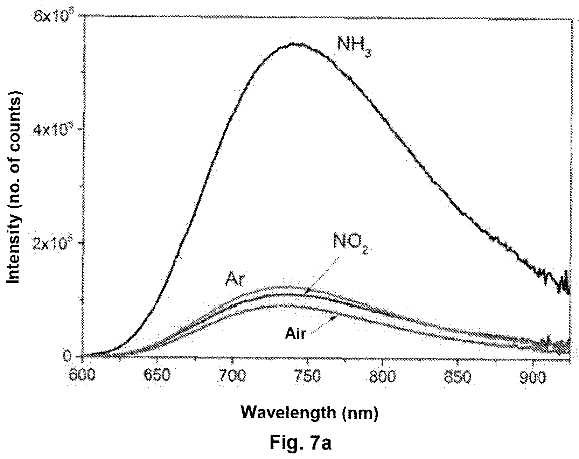

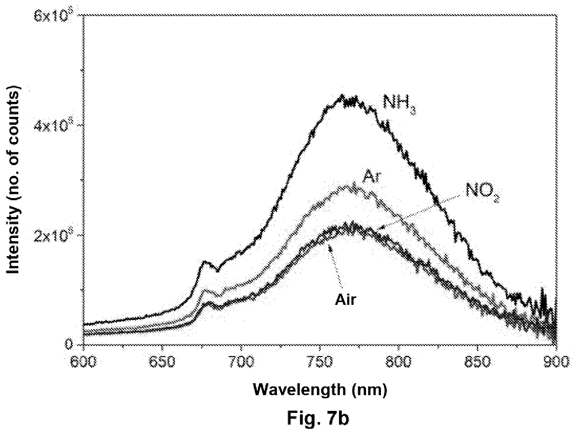

The optical gas detection properties of $Mo_6$ and $Mo_6$@Graphene materials were preliminarily investigated using films deposited on quartz and alumina transducer substrates, respectively, and in the presence of $NO_2$ (1 ppm) and $NH_3$ (250 ppm) balanced in air. Photoluminescence (PL) spectroscopy provides information about the interaction between molybdenum clusters and target gases. The steady-state emission spectrum of the pure $Mo_6$ crystalline material shows a broad emission band centred at 725 nm when recorded under an argon atmosphere (figure 7a). This wavelength is characteristic of the electronic triplet excited state of the $\{Mo_6I^i_8\}^{4+}$ cluster core. A similar spectrum was recorded for the $Mo_6$@Graphene device under an inert atmosphere, but a redshift to 770 nm was detected (figure 7b). This shift can be attributed to two main factors: the polarity conferred by the graphene environment and the interactions between the defective graphene and the $Mo_6$ material. Both films were exposed to $NO_2$, $NH_3$ or $O_2$ (air) gases and the PL changes were measured. In the *in situ* characterisation, intensity variations were observed in the emission spectra with respect to the analyte gases. A decrease in PL was observed in the presence of air with respect to exposure under argon. This is due to efficient PL quenching by oxygen which leads to the formation of $O_2$ ($^1\Delta g$), which is an intrinsic property of the $\{Mo_6{}^i{}_8\}^{4+}$ cluster core materials. A decrease in PL was also observed after exposure to $NO_2$, and this PL quenching is achieved to a lesser extent than in the presence of air. On the contrary, a high PL response was detected in the presence of ammonia. The different responses of the molybdenum crystalline material with $NH_3$ and $NO_2$ gases follow the same trend for the Mos@Graphene nanomaterial. In addition to the donor/acceptor properties of the gas molecules, these phenomena could be associated with a strong interaction between $NH_3$ and the molybdenum clusters.

Example 5: Orthogonal sensing

As seen above, the hybrid nanomaterial film coatings of the invention (Mo$_6$@Graphene) on standard alumina substrates can be interrogated using two different interrogation modes: resistive and optical, which can be used, for example, for the detection of nitrogen dioxide and ammonia, respectively. This behaviour would correspond to orthogonal detection, which is a term coined in the context of detecting different toxic gases or even multi-component gas mixtures using sensor arrays, in other words, in the context of detecting gases through parallel optical and electrical measurements.

Ideally, orthogonal detection would be achieved because at least one highly specific sensor is present in the array for every target species. In a real application, orthogonality can be achieved either by modifying/optimising the gas-sensitive film to make it more specific to its target species (in this approach, specificity or selectivity are generally improved to some extent) or by constructing orthogonal metasensors built on the combination of response features from an array of sensors with partially overlapped selectivity. The resistive and optical results described in this work pave the way for devising an unconventional strategy to achieve orthogonal detection.

**Claims**

1. A hybrid nanomaterial comprising an octahedral crystalline cluster of formula $[Mo_6{}^i{}_8(OH)^a{}_4(H_2O)^a{}_2]\cdot 2H_2O$, wherein the crystalline cluster is supported on graphene.

2. The hybrid nanomaterial of claim 1, wherein the graphene comprises graphene nanoplatelets.

3. A method for preparing a hybrid nanomaterial according to any one of claims 1 or 2, wherein the method comprises:

   a) Dispersing a precursor of formula $(Bu_4N)_2$ $[Mo_6{}^i{}_8(O_2CCH_3)^a{}_6]$ in a mixture of water, acetone and triethylamine (TEA) at room temperature under continuous stirring;
   b) Heating the suspension resulting from step (a) at 35°C for 1 hour;
   c) Slowly evaporating the solution resulting from step (b) at room temperature, in such a way that microcrystals are formed;
   d) Collecting the microcrystals resulting from step (c) when the solution becomes transparent;
   e) Suspending the microcrystals resulting from step (d) in dichloromethane under sonication;
   f) Suspending graphene in dichloromethane under sonication;
   g) Adding the suspension resulting from step (e) to the suspension resulting from step (f);
   h) Homogenising the mixture resulting from step (g) under sonication.

4. A gas detection system comprising, at least:

   - a gas sensor provided with a hybrid nanomaterial comprising an octahedral crystalline cluster of formula $[M_6X^i{}_8L^a{}_6]^{n+/n+}$ on a solid support selected from a group consisting of graphene, graphene oxide, reduced graphene oxide and N- and S-doped graphene, wherein M is a metal consisting of molybdenum or tungsten, $X^i$ is selected from a group consisting of chlorine, bromine and iodine, and $L^a$ is selected from a group consisting of halogens and O-, S- and N-donor ligands; and
   - electrical interrogation means or optical interrogation means and electrical interrogation means configured to interrogate the gas sensor.

5. The gas detection system according to claim 4, wherein the gas sensor is provided with a hybrid nanomaterial according to any one of claims 1 or 2.

6. The gas detection system according to any one of claims 4 or 5, wherein optical interrogation means are configured to detect photoluminescence from the gas sensor.

7. The gas detection system according to any one of claims 4 or 5, wherein electrical interrogation means are configured to detect variations in the electrical resistivity of the gas sensor.

Fig. 1

**Fig. 2**

EP 4 563 533 A1

Fig. 3a

Fig. 3b

Fig. 4a

**Fig. 4b**

**Fig. 5**

**Fig. 6a**

**Fig. 6b**

Fig. 7a

**Fig. 7b**

# EP 4 563 533 A1

| INTERNATIONAL SEARCH REPORT | International application No.<br>PCT/ES2023/070485 |
|---|---|

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)

C01G, G01N

Documentation searched other than minimum documentation to the extent that such documents are included in the fields searched

Electronic data base consulted during the international search (name of data base and, where practicable, search terms used)

EPODOC, INVENES, WPI, NPL, XPESP, COMPENDEX, MEDLINE

**C. DOCUMENTS CONSIDERED TO BE RELEVANT**

| Category* | Citation of document, with indication, where appropriate, of the relevant passages | Relevant to claim No. |
|---|---|---|
| A | MARCHUK, M.V., et al., Optical property trends in a family of {Mo6I8} aquahydroxo complexes, Dalton Transactions, 07/07/2021, Vol.10, pp. 8794 – 8802, <DOI: doi: 10.1039/d1dt01293b>; abstract, paragraph: "Experimental Section". | 1-7 |
| A | WO 2012061724 A2 (UNIV MICHIGAN STATE, et al.) 10/05/2012; abstract, paragraphs: [0009]-[0016] y [0035]. | 1-7 |
| A | FELIZ, M., et al., Supramolecular Anchoring of Octahedral Molybdenum Clusters onto Graphene and Their Synergies in Photocatalytic Water Reduction, Inorganic chemistry, 18/11/2019, Vol. 58, pp.15443 - 15454, ISSN 1520-510X (Electronic), <DOI: doi:10.1021/acs.inorgchem.9b02529pubmed:31663340>; abstract, paragraph: "Experimental Section". | 1-7 |

☒ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search<br>04/10/2023 | Date of mailing of the international search report<br>**(05/10/2023)** |
|---|---|
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>M. García Poza<br><br>Telephone No. 913495568 |

Form PCT/ISA/210 (second sheet) (July 2022)

## INTERNATIONAL SEARCH REPORT

| International application No. |
| --- |
| PCT/ES2023/070485 |

| C (continuation). | DOCUMENTS CONSIDERED TO BE RELEVANT | |
| --- | --- | --- |
| Category * | Citation of documents, with indication, where appropriate, of the relevant passages | Relevant to claim No. |
| A | PUCHE, M., et al., Enhanced Photocatalytic Activity and Stability in Hydrogen Evolution of Mo6Iodide Clusters Supported on Graphene Oxide, Nanomaterials, 28/06/2020, Vol. 10, pp. 1259, <DOI: doi: 10.3390/nano10071259>; abstract, paragraph: "Materials and Methods". | 1-7 |
| A | SEGURA-SANCHIS, E., et al., Octahedral Molybdenum Cluster-Based Single Crystals as Fabry-Pérot Microresonators, Crystal Growth and Design, 05/01/2022, Vol. 22, pp. 60 - 65, ISSN1528-7483 (print) ISSN 1528-7505 (electronic), <DOI: doi:10.1021/acs.cgd.1c01144>; abstract, paragraph: "Supporting Information". | 1-7 |
| A | RENAUD, A., et al., Preparation by electrophoretic deposition of molybdenum iodide cluster based functional nanostructured photoelectrodes for solar cells, Electrochimica Acta, 01/06/2019, Vol. 317, pp. 737 - 745, ISSN 0013-4686, <DOI: doi:10.1016/j.electacta.2019.05.154>; abstract, paragraph: "Materials and Methods". | 1-7 |
| A | SATSUMA et al. Polytungstate clusters on zirconia as a sensing material for a selective ammonia gas sensor, Sensors and Actuators B: Chemical, 06/05/2007, Vol. 123, pp. 757 -762, ISSN 0925-4005, <DOI: doi:10.1016/j.snb.2006.10.011> abstract, paragraph: "Experimental". | 1-7 |

Form PCT/ISA/210 (continuation of second sheet) (July 2022)

## INTERNATIONAL SEARCH REPORT

Information on patent family members

| International application No. |
| --- |
| PCT/ES2023/070485 |

| Patent document cited in the search report | Publication date | Patent family member(s) | Publication date |
| --- | --- | --- | --- |
| WO2012061724 A2 | 10.05.2012 | US2014017127 A1 | 16.01.2014 |
| | | US10520435 B2 | 31.12.2019 |
| | | EP2635624 A2 | 11.09.2013 |
| | | EP2635624 A4 | 24.06.2015 |

**INTERNATIONAL SEARCH REPORT**

| International application No. |
| --- |
| PCT/ES2023/070485 |

CLASSIFICATION OF SUBJECT MATTER

*C01G39/04* (2006.01)
*G01N21/64* (2006.01)
*G01N27/00* (2006.01)